(19) Europäisches Patentamt / European Patent Office / Office européen des brevets

(11) **EP 4 148 663 A1**

(12) **EUROPEAN PATENT APPLICATION**
published in accordance with Art. 153(4) EPC

(43) Date of publication:
**15.03.2023 Bulletin 2023/11**

(21) Application number: **21800080.0**

(22) Date of filing: **26.04.2021**

(51) International Patent Classification (IPC):
**G06T 7/00** (2006.01)     **G01N 21/88** (2006.01)

(52) Cooperative Patent Classification (CPC):
**G01N 21/88; G06T 7/00**

(86) International application number:
**PCT/JP2021/016627**

(87) International publication number:
**WO 2021/225084 (11.11.2021 Gazette 2021/45)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.05.2020 JP 2020081971**

(71) Applicant: **FUJIFILM Corporation
Tokyo 106-8620 (JP)**

(72) Inventor: **HORITA, Shuhei
Tokyo 106-8620 (JP)**

(74) Representative: **Parker, Andrew James
Meissner Bolte Patentanwälte
Rechtsanwälte Partnerschaft mbB
Widenmayerstraße 47
80538 München (DE)**

(54) **DAMAGE EVALUATING DEVICE, METHOD, AND PROGRAM**

(57)     A damage evaluation device, a method, and a program that can automatically evaluate a damage of an outer layer of a structure occurring with respect to construction of the structure are provided. In a damage evaluation device of a structure including a processor, the processor is configured to perform image acquisition processing of acquiring a captured image of the structure, perform damage detection processing of detecting damages (cracks) of the structure based on the acquired image, perform feature region detection processing of detecting a structure feature region (a region of a P cone mark) related to construction of the structure based on the acquired image, perform selection processing of selecting a specific damage (settlement crack) related to the detected structure feature region among the detected damages, and perform information output processing of outputting information about the selected specific damage. By outputting the information about the specific damage, the damage of the outer layer of the structure occurring with respect to the construction of the structure can be automatically evaluated, and application to validity verification of a construction method and improvement of the construction method can be made.

FIG. 8

**Description**

BACKGROUND OF THE INVENTION

1. Field of the Invention

The present invention relates to a damage evaluation device, a method, and a program and particularly, to a technology for evaluating a damage of a structure that occurs with respect to construction of the structure.

2. Description of the Related Art

In the related art, visual evaluation of a defect occurring in an outer layer portion of a newly constructed structure and its application to validity verification of a construction method and improvement of the construction method have been suggested (Guide for Quality Assurance of Concrete Structure (draft), December 2015, (p. 17-20, Tohoku Regional Development Bureau, Ministry of Land, Infrastructure, Transport and Tourism), Internet <http://www.thr.mlit.go.jp/road/sesaku/tebiki/kyoukyaku.pdf>).

However, since the visual evaluation is performed, there is a problem of variations in results depending on a person, and implementation of automatic evaluation based on a unified standard is desired.

In addition, while inspection and evaluation of a structure for maintenance management and repair of the structure are performed, a technology for automatically evaluating a damage of the structure based on a captured image of the structure has been known (JP2020-38227A and JP2015-105905A).

JP2020-38227A discloses an image processing method including detecting a crack on an outer surface of a structure by performing image analysis on an image showing the outer surface of the structure, detecting a feature amount (a direction, a length, and a width of the crack, intensity of an edge, density of an edge, and the like) of the detected crack, grouping each crack based on the detected feature amount, and displaying a crack image filled with the crack using different line types or colors for each group in displaying the crack image.

In addition, JP2015-105905A discloses a correction method of a tunnel lining surface image that enables the current tunnel lining surface image to be corrected by comparing tunnel lining surface images acquired in time series, so that even a crack that has changed by approximately a few mm can be recognized.

In the correction method of a tunnel lining surface image disclosed in JP2015-105905A, the tunnel lining surface image used in time-series management of a change in shape is corrected by detecting a positionally unchanging installed object or joint on a tunnel lining surface and performing image processing of matching a position of the installed object or the joint between different time-series images to generate a positionally normalized tunnel lining surface image.

SUMMARY OF THE INVENTION

Some damages or degradation of a structure occurs because of construction of the structure.

In JP2020-38227A, while grouping of the crack on the outer surface of the structure based on the detected feature amount of the crack is disclosed, selection of a damage occurring with respect to construction of the structure is not disclosed.

In addition, in JP2015-105905A, while detection of the crack of the concrete structure and the joint is disclosed, the positionally unchanging joint is used for performing image processing (affine transformation) of matching the previous tunnel lining surface image and the current tunnel lining surface image and is not used for selecting a damage.

The present invention is conceived in view of such matters, and an object thereof is to provide a damage evaluation device, a method, and a program that can automatically evaluate a damage of an outer layer of a structure occurring with respect to construction of the structure.

The invention according to a first aspect for achieving the object is a damage evaluation device of a structure, the device comprising a processor, in which the processor is configured to perform image acquisition processing of acquiring a captured image of the structure, perform damage detection processing of detecting damages of the structure based on the acquired image, perform feature region detection processing of detecting a structure feature region related to construction of the structure based on the acquired image, perform selection processing of selecting a specific damage related to the detected structure feature region among the detected damages, and perform information output processing of outputting information about the selected specific damage.

According to the first aspect of the present invention, the specific damage related to the structure feature region related to the construction of the structure among the detected damages is automatically selected based on the captured image of the structure, and the information about the selected specific damage is output. Thus, a damage of an outer layer of a structure occurring with respect to construction of the structure can be automatically evaluated, and application to validity verification of a construction method and improvement of the construction method can be made.

In the damage evaluation device according to a second aspect of the present invention, it is preferable that the damage detection processing is executed by a first trained model that, in a case where the image is input, outputs a region of each damage for each damage of the structure as a recognition result.

In the damage evaluation device according to a third aspect of the present invention, the damages of the structure are cracks of the structure, and the specific damage is a specific crack that occurs because of the construction of the structure among the cracks of the structure. Examples of the specific crack include a settlement crack and a crescent crack occurring in an outer layer of a concrete structure.

In the damage evaluation device according to a fourth aspect of the present invention, it is preferable that the feature region detection processing is executed by a second trained model that, in a case where the image is input, outputs the structure feature region as a recognition result.

In the damage evaluation device according to a fifth aspect of the present invention, the structure feature region is a region showing a construction mark related to a specific crack that is the specific damage occurring because of the construction of the structure. Examples of the construction mark related to the specific crack include a P cone mark, a joint, and a construction joint in the outer layer of the concrete structure.

In the damage evaluation device according to a sixth aspect of the present invention, it is preferable that in the selection processing, a damage in contact with the structure feature region or a damage overlapping with the structure feature region is selected as the specific damage.

In the damage evaluation device according to a seventh aspect of the present invention, it is preferable that the selection processing includes expansion processing of expanding a size of the structure feature region, and a damage in contact with the structure feature region after the expansion processing or a damage overlapping with the structure feature region after the expansion processing is selected as the specific damage. A ratio or an expansion amount by which the size of the structure feature region is expanded may be a preset value or a value appropriately set by a user.

In the damage evaluation device according to an eighth aspect of the present invention, it is preferable that the processor is configured to perform size specification processing of specifying a size of the specific damage.

In the damage evaluation device according to a ninth aspect of the present invention, the damages of the structure may include cracks of the structure, the specific damage may be a specific crack that occurs because of the construction of the structure among the cracks of the structure, and in the size specification processing, a relative length between a length of the specific crack on the image and a length of the structure feature region on the image may be calculated, and the calculated relative length may be used as the size of the specific damage.

In the damage evaluation device according to a tenth aspect of the present invention, it is preferable that the damages of the structure include cracks of the structure, the specific damage is a specific crack that occurs because of the construction of the structure among the cracks of the structure, and in the size specification processing, an actual size of the specific damage is calculated based on a length of the specific crack on the image, a length of the structure feature region on the image, and an actual size of the structure feature region.

In the damage evaluation device according to an eleventh aspect of the present invention, it is preferable that the damages of the structure include cracks of the structure, the specific damage is a specific crack that occurs because of the construction of the structure among the cracks of the structure, the structure having a scale reference of a known actual dimension is captured in the image, and in the size specification processing, an actual size of the specific damage is calculated based on a length of the specific crack on the image and a length of the scale reference on the image.

In the damage evaluation device according to a twelfth aspect of the present invention, it is preferable that the damages of the structure include cracks of the structure, the specific damage is a specific crack that occurs because of the construction of the structure among the cracks of the structure, and in the size specification processing, an actual size of the specific damage is calculated based on a length of the specific crack on the image and an imaging condition and camera information of a camera capturing the image. Examples of the imaging condition of the camera include a distance between the camera and the specific crack. Examples of the camera information include a focal length, a size of an image sensor, the number of pixels, or a pixel pitch.

In the damage evaluation device according to a thirteenth aspect of the present invention, it is preferable that in the information output processing, each specific damage is identifiably output in accordance with an attribute of the specific damage. Examples of the attribute of the specific damage include a length, a width, and an area of the damage. In addition, it is preferable that each specific damage is identifiable by performing color-coding or using a difference or the like in line type in accordance with the attribute of the specific damage.

In the damage evaluation device according to a fourteenth aspect of the present invention, it is preferable that in the information output processing, the structure feature region corresponding to the specific damage is identifiably output in accordance with an attribute of the specific damage.

In the damage evaluation device according to a fifteenth aspect of the present invention, it is preferable that the processor is configured to calculate a ratio of a total number of the structure feature regions and the number of the structure feature regions corresponding to the specific damage, and in the information output processing, the calculated ratio is output.

In the damage evaluation device according to a sixteenth aspect of the present invention, it is preferable that the processor is configured to perform editing instruction reception processing of receiving an editing instruction for at least one of a detection result of the detected damages or a detection result of the detected structure feature region from an operation unit operated by a user, and perform editing processing of editing the detection result in accordance with the received editing instruction.

In the damage evaluation device according to a seventeenth aspect of the present invention, it is preferable that in the information output processing, the information about the specific damage is output and displayed on a display or is stored in a memory as a file.

In the damage evaluation device according to an eighteenth aspect of the present invention, it is preferable that the information about the specific damage includes a damage quantity table that has items of damage identification information, a damage type, and a size and in which information corresponding to each item is described for each specific damage.

The invention according to a nineteenth aspect is a damage evaluation method comprising performing damage evaluation of a structure by a processor, in which each process of the processor includes a step of acquiring a captured image of the structure, a step of detecting damages of the structure based on the acquired image, a step of detecting a structure feature region related to construction of the structure based on the acquired image, a step of selecting a specific damage related to the detected structure feature region among the detected damages, and a step of outputting information about the selected specific damage.

The invention according to a twentieth aspect is a damage evaluation program causing a computer to execute a method of performing damage evaluation of a structure, the method comprising performing damage evaluation of a structure by a processor, in which each process of the processor includes a step of acquiring a captured image of the structure, a step of detecting damages of the structure based on the acquired image, a step of detecting a structure feature region related to construction of the structure based on the acquired image, a step of selecting a specific damage related to the detected structure feature region among the detected damages, and a step of outputting information about the selected specific damage.

According to the present invention, a damage of an outer layer of a structure occurring with respect to construction of the structure can be automatically evaluated.

**BRIEF DESCRIPTION OF THE DRAWINGS**

Figs. 1A and 1B are diagrams showing an example of a damage of a structure.
Fig. 2 is a diagram showing an example of a flow from damage detection to selection of a specific damage.
Fig. 3 is a diagram used for describing a method of selecting whether or not a detected crack is a settlement crack.
Fig. 4 is a block diagram showing an example of a hardware configuration of a damage evaluation device according to an embodiment of the present invention.
Fig. 5 is a conceptual diagram showing an embodiment of a damage detection processing unit and a feature region detection processing unit composed of a CPU or the like.
Fig. 6 is a diagram showing a first display example of a captured image of a structure of an evaluation target and information or the like about the specific damage.
Fig. 7 is a diagram showing a second display example of the captured image of the structure of the evaluation target and the information or the like about the specific damage.
Fig. 8 is a diagram showing a display screen example obtained by adding a color-coded crack image to the image shown in (B) of Fig. 7.
Figs. 9A and 9B are diagrams showing another example of the specific damage related to a structure feature region related to construction of the structure.
Figs. 10A and 10B are diagrams showing still another example of the specific damage related to the structure feature region related to the construction of the structure.
Fig. 11 is a diagram showing another example of the flow from the damage detection to the selection of the specific damage.
Fig. 12 is a damage diagram including information about the crack.
Fig. 13 is a table showing an example of a damage quantity table included in a damage detection result.
Fig. 14 is a diagram showing a method of adding a vertex to a polyline along the crack.
Fig. 15 is a diagram showing a method of deleting a vertex from the polyline along the crack.
Fig. 16 is a flowchart showing an embodiment of a damage evaluation method according to the present invention.

**DESCRIPTION OF THE PREFERRED EMBODIMENTS**

Hereinafter, preferred embodiments of a damage evaluation device, a method, and a program according to the present invention will be described in accordance with the accompanying drawings.

[Outline of Present Invention]

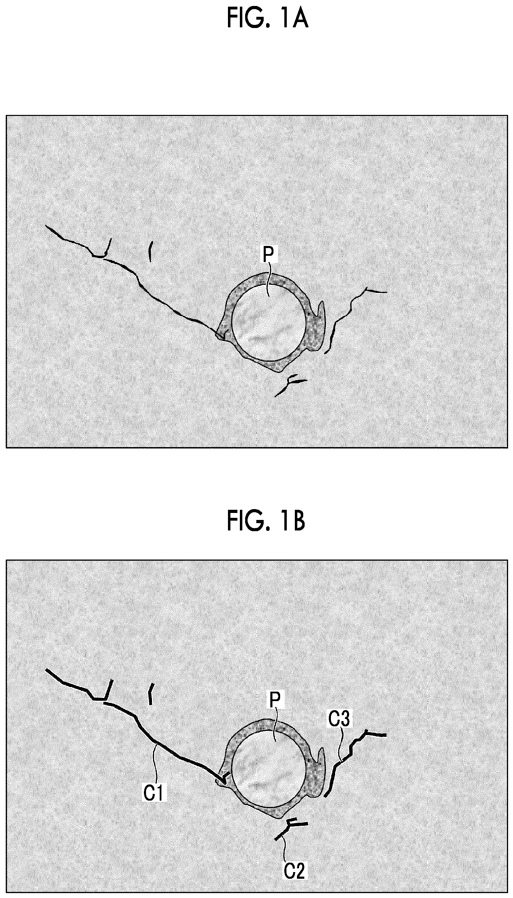

Figs. 1A and 1B are diagrams showing an example of a damage of a structure. Fig. 1A shows an original captured image of a concrete structure having a construction mark of the structure, and Fig. 1B is a composite image obtained by displaying a crack detection result (crack image) in a superimposed manner on the original image.

The construction mark of the structure in this example is a mark of a plastic cone (hereinafter, referred to as a "P cone"). P in Figs. 1A and 1B denotes a P cone mark. Hereinafter, the P cone mark P will be described.

Construction of a concrete structure such as a wall, a pillar, or a beam is generally performed by assembling reinforcing bars and formwork and installing concrete. The formwork is fixed at a desired interval by a rod-like separator having screw portions at both ends thereof and a P cone attached to both end parts of the separator, and concrete is poured into the formwork. In a case where the concrete cures, the formwork and the P cone are separated.

In a case where the P cone is separated, a hole in which the screw portion of the separator is exposed appears. A mark of a circle after closing the hole with mortar is the P cone mark P.

C1 to C3 in Fig. 1B denote cracks around the P cone mark P. The cracks C1 to C3 appear in the crack image in which a region of a crack detected from the original image in Fig. 1A is filled with a specific color.

The cracks C1 to C3 around the P cone mark P are classified as settlement cracks and are one type of crack that occurs because of the construction of the structure. A settlement crack is a crack that occurs because a formwork separator, formwork on an outer surface, and the like confine displacement caused by settlement or bleeding after the installation of the concrete.

In one aspect of the present invention, damages of a structure are detected from a captured image of the structure, a damage (specific damage) related to construction of the structure among the detected damages is selected, and information about the selected specific damage is output. Accordingly, application to validity verification of a construction method of the structure and improvement of the construction method can be made.

In the example shown in Figs. 1A and 1B, a structure feature region related to the construction of the structure is a region of the P cone mark P, and the specific damage related to the region of the P cone mark is the settlement cracks C1 to C3.

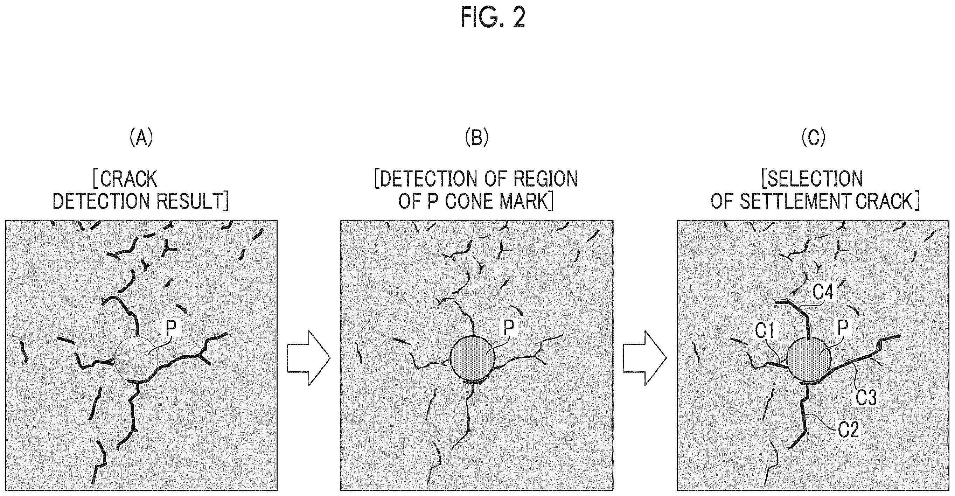

Fig. 2 is a diagram showing an example of a flow from damage detection to the selection of the specific damage.

As shown in (A) of Fig. 2, the damages (in this example, cracks) of the structure are detected based on the captured image of the structure. The detection of the cracks may be performed using artificial intelligence (AI) or may be performed using an image processing algorithm.

In addition, as shown in (B) of Fig. 2, the structure feature region (in this example, the region of the P cone mark P) related to the construction of the structure is detected based on the captured image of the structure. The detection of the region of the P cone mark P may be performed using AI or may be performed using the image processing algorithm. In addition, the detection may be performed by receiving an instruction input manually provided by a user.

Next, as shown in (C) of Fig. 2, settlement cracks (specific cracks) C1 to C4 related to the region of the P cone mark P among the detected cracks are selected, and the selected settlement cracks C1 to C4 are output by performing color-coding or changing a line type so that the selected settlement cracks C1 to C4 can be identified from the other cracks.

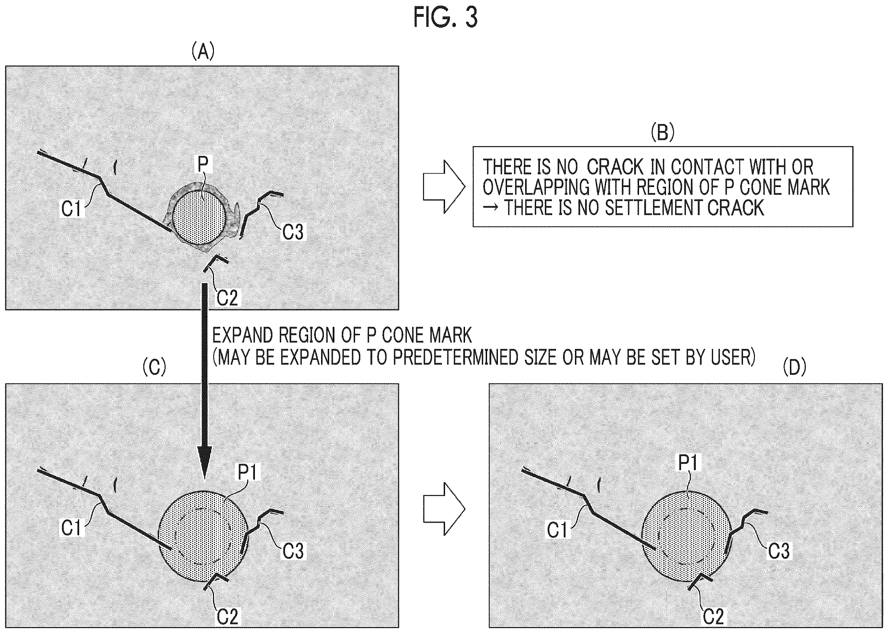

Fig. 3 is a diagram used for describing a method of selecting whether or not the detected cracks are settlement cracks.

Each of the detected cracks C1 to C3 and the P cone mark P are shown in (A) of Fig. 3.

The selection as to whether or not the cracks C1 to C3 are settlement cracks related to the region of the P cone mark P is performed by selecting the cracks C1 to C3 as settlement cracks in a case where the cracks C 1 to C3 are in contact with the region of the P cone mark P or overlap with the region of the P cone mark P.

In this selection method, all of the cracks C1 to C3 are spaced from the region of the P cone mark P. Thus, it is recognized that there is no settlement crack ((B) of Fig. 3).

On the other hand, as shown in (C) of Fig. 3, a size of the region of the P cone mark P is expanded to a size of a region of a P cone mark P1.

In expansion processing of the region of the P cone mark P, the region of the P cone mark P can be expanded by expanding the region of the P cone mark P by a constant ratio in a diameter direction from a center of the circular P cone mark P or enlarging an outer shape of the circular P cone mark P by a constant expansion amount (width). The ratio or the expansion amount by which the size of the region of the P cone mark P is expanded may be a preset value or a value appropriately set by the user.

In a case where the cracks C1 to C3 are in contact with the region of the P cone mark P1 after the expansion processing or overlap with the region of the P cone mark P1, the cracks C1 to C3 are selected as settlement cracks ((D) of Fig. 3).

In this selection method, all of the cracks C1 to C3 are in contact with the region of the P cone mark P1 or overlap with the region of the P cone mark P1 and thus, are selected as settlement cracks.

The region of the P cone mark is not limited to a case of enlarging the region of the detected P cone by the expansion processing. A region slightly larger than the original region of the P cone mark may be detected as the region of the P cone mark.

In addition, shortest distances between the cracks C1 to C3 and the P cone mark P1 may be calculated, and the cracks C1 to C3 may be selected as settlement cracks in a case where the distances are within a threshold value.

[Hardware Configuration of Damage Evaluation Device]

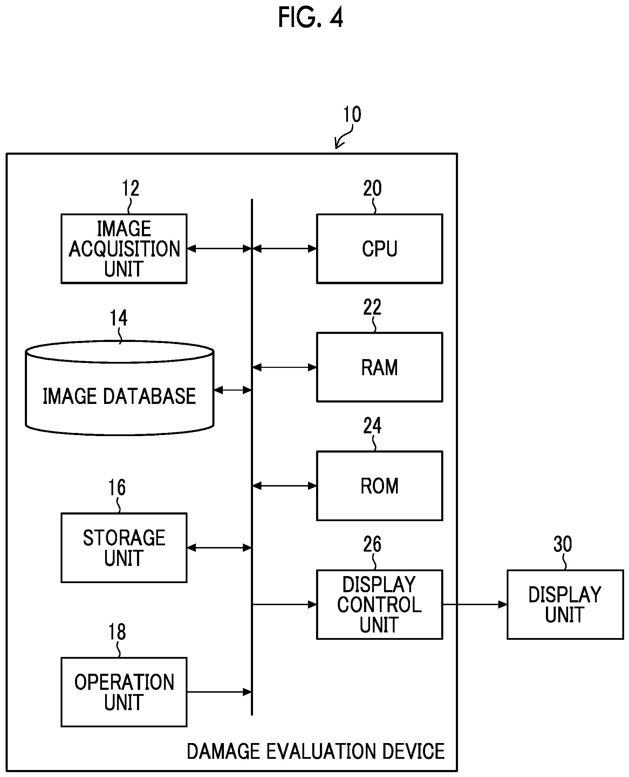

Fig. 4 is a block diagram showing an example of a hardware configuration of the damage evaluation device according to the embodiment of the present invention.

As a damage evaluation device 10 shown in Figs. 1A and 1B, a personal computer or a workstation can be used. The damage evaluation device 10 of this example is mainly composed of an image acquisition unit 12, an image database 14, a storage unit 16, an operation unit 18, a central processing unit (CPU) 20, a random access memory (RAM) 22, a read only memory (ROM) 24, and a display control unit 26.

The image acquisition unit 12 corresponds to an input/output interface and acquires, for example, the captured image of the structure of an evaluation target in this example. Examples of the structure of the evaluation target include a wall, a pillar, and a beam of a bridge, a tunnel, and a building.

Images acquired by the image acquisition unit 12 are multiple images (image group) obtained by imaging the structure manually or using, for example, a drone (unmanned flying object) or a robot in which a camera is mounted. It is preferable that the image group covers the entire structure and adjacent images overlap with each other.

The image group acquired by the image acquisition unit 12 is stored in the image database 14.

The storage unit 16 is a memory composed of a hard disk apparatus, a flash memory, or the like, and the storage unit 16 stores information about not only an operating system and a damage evaluation program but also computer-aided design (CAD) data indicating the structure and the damages obtained as a file. The information about the damages includes a damage evaluation result such as a damage image or a damage diagram (CAD data).

In a case where the CAD data of the structure of the evaluation target is already present, the CAD data can be used. In a case where the CAD data of the structure is not present, the CAD data can be automatically created based on the image group stored in the image database 14.

In a case where the image group stored in the image database 14 is captured by the camera mounted in the drone, feature points between images overlapping with each other in the image group can be extracted, a position and a posture of the camera mounted in the drone can be estimated based on the extracted feature points, and a three-dimensional point group model in which three-dimensional positions of the feature points are estimated at the same time from estimation results of the position and the posture of the camera can be generated.

There is a structure from motion (SfM) method of tracking motions of multiple feature points from the image group in which an imaging position of the camera is moving by the drone, and estimating a three-dimensional structure (structure) of the structure and a camera posture (motion) at the same time. In recent years, an optimization calculation method called bundle adjustment has been developed to enable high-accuracy output.

As parameters (a focal length, an image size of an image sensor, a pixel pitch, and the like) of the camera required in a case of applying the SfM method, parameters stored in the storage unit 16 can be used. In addition, the CAD data of the structure can be generated based on the generated three-dimensional point group model.

The operation unit 18 includes a keyboard, a mouse, and the like that are connected to a computer in a wired or wireless manner, and not only functions as an operation unit for providing a normal operation instruction to the computer but also functions as an operation unit for editing a detection result of the damages of the structure detected based on the captured image of the structure and a detection result of the structure feature region such as the P cone mark by a user operation. Details of the editing and the like of the detection result of the damages will be described later.

The CPU 20 reads out various programs stored in the storage unit 16, the ROM 24, or the like, controls each unit, and performs damage detection processing of detecting the damages of the structure based on the captured image of the structure, feature region detection processing of detecting the structure feature region (the region of the P cone mark or the like) related to the construction of the structure, selection processing of selecting the specific damage related to the structure feature region among the detected damages, information output processing of outputting the information about the selected specific damage, and the like.

Each of the damage detection processing of detecting the damages based on the captured image of the structure and the feature region detection processing of detecting the structure feature region can be performed using AI.

For example, a trained model using a convolution neural network (CNN) can be used as AI.

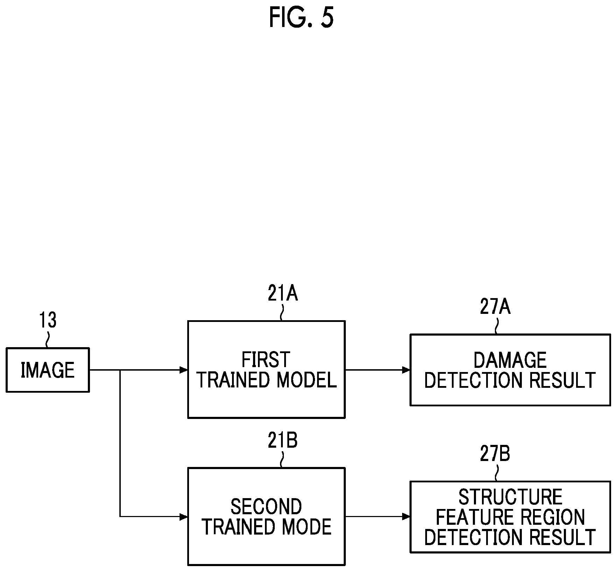

Fig. 5 is a conceptual diagram showing an embodiment of a damage detection processing unit and a feature region detection processing unit composed of a CPU or the like.

In Fig. 5, each of the damage detection processing unit and the feature region detection processing unit is composed of a first trained model 21A and a second trained model 21B.

Each of the first trained model 21A and the second trained model 21B comprises an input layer, a middle layer, and an output layer, and each layer has a structure in which a plurality of "nodes" are connected by "edges".

A captured image 13 of the structure is input into the input layer of the CNN. The middle layer includes a plurality of sets of a convolutional layer and a pooling layer as one set and is a part in which a feature is extracted from the image input from the input layer. In the convolutional layer, a "feature map" is acquired by performing filter processing (performing a convolution operation using a filter) on nodes close to the previous layer. In the pooling layer, a new feature map is obtained by reducing the feature map output from the convolutional layer. The "convolutional layer" has a role of feature extraction such as edge extraction from the image, and the "pooling layer" has a role of providing robustness so that the extracted feature is not affected by translation or the like.

The output layer of the CNN is a part in which the feature map indicating the feature extracted in the middle layer is output. In the output layer of the first trained model 21A of this example, for example, an inference result (recognition result) obtained by performing region classification (segmentation) on a region of each damage of the structure captured in the image in units of pixels or in units of several pixels as one unit is output as a damage detection result 27A. Similarly, in the output layer of the second trained model 21B of this example, for example, an inference result obtained by performing the region classification on the structure feature region related to the construction of the structure captured in the image in units of pixels or in units of several pixels as one unit is output as a structure feature region detection result 27B.

For example, the first trained model 21A is a model trained to detect the cracks by machine learning, and the second trained model 21B is a model trained to detect the P cone mark by machine learning.

The first trained model 21A and the second trained model 21B may be composed of one trained model, and each of the first trained model 21A and the second trained model 21B may be configured to output the damage detection result 27A and the structure feature region detection result 27B.

Returning to Fig. 4, the CPU 20 performs the selection processing of selecting the specific damage related to the detected structure feature region among the detected damages based on the damage detection result 27A and the structure feature region detection result 27B detected by the first trained model 21A and the second trained model 21B, respectively. In this example, the settlement crack (specific crack) related to the P cone mark among the detected cracks is selected. The selection of the settlement crack can be performed using the method described using Fig. 3 and will not be described in detail here.

The CPU 20 displays information about the selected specific damage by outputting the information about the selected specific damage to the display unit (display) 30 via the display control unit 26 or stores the information about the selected specific damage in the storage unit (memory) 16 as a file. In addition, it is preferable that the CPU 20 also displays information about the structure feature region by outputting the information about the structure feature region to the display unit 30 via the display control unit 26 or stores the information about the structure feature region in the storage unit 16 as a file.

The RAM 22 is used as a work region of the CPU 20 and is used as a storage unit that temporarily stores the read-out programs or various data.

The display control unit 26 is a part that creates display data to be displayed on the display unit 30 and outputs the display data to the display unit 30. In this example, the display control unit 26 displays the information or the like about the selected specific damage detected by the CPU 20 on the display unit 30 and displays a screen or the like for editing the information or the like about the specific damage based on a user operation from the operation unit 18 on the display unit 30.

Various displays such as a liquid crystal monitor that can be connected to the computer are used as the display unit 30. The display unit 30 displays the captured image of the structure input from the display control unit 26 and the information or the like about the specific damage detected from the image. In addition, the display unit 30 is used as a part of a user interface together with the operation unit 18.

A processor including the CPU 20 of the damage evaluation device 10 having the above configuration performs each processing described above by reading out a damage evaluation program stored in the storage unit 16 or the ROM 24 and executing the damage evaluation program.

<Action of Damage Evaluation Device>

Next, an action of the damage evaluation device 10 shown in Fig. 4 will be described using a bridge as an example of the structure.

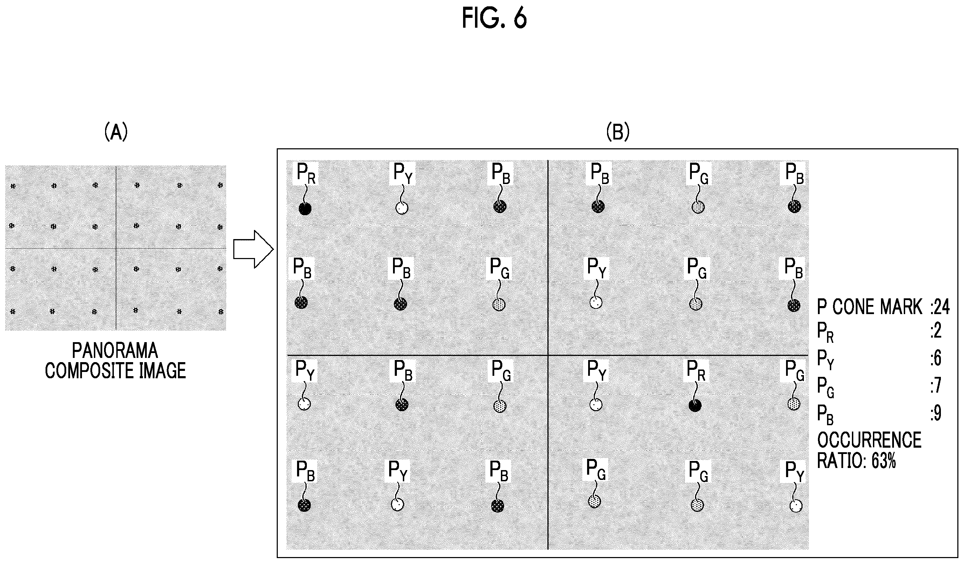

Fig. 6 is a diagram showing a first display example of the captured image of the structure of the evaluation target and the information or the like about the specific damage.

The CPU 20 of the damage evaluation device 10, the damage evaluation program stored in the storage unit 16, the RAM 22 and the ROM 24, the display control unit 26, and the like constitute the processor, and the processor performs various processing shown below.

The processor performs image acquisition processing of acquiring the captured image of the structure (an outer layer of the concrete structure) of the evaluation target from the image acquisition unit 12. In a case where the image of the structure is stored in the image database 14, the processor reads out the image of the structure of the evaluation target from the image database 14. In this case, the processor acquires a plurality of images and performs image processing of performing panorama composition on the plurality of images so that images of overlapping regions of the plurality of acquired images match each other.

It is preferable that a panorama composite image after panorama composition is an orthoimage orthographically projected to an outer surface of the concrete structure as shown in (A) of Fig. 6.

Detection of a crack of less than or equal to 0.1 mm from the image requires a high-resolution image. Thus, an imaging range of one image is decreased. While it is preferable to perform panorama composition on the plurality of images in order to acquire an image of the structure having a certain size, one image may be used in a case of a large crack width where a high-resolution camera or crack detection is required.

In a case where the panorama composite image (image 13) is input into the first trained model 21A and the second trained model 21B functioning as the damage detection processing unit and the feature region detection processing unit shown in Fig. 5, the first trained model 21A detects the cracks based on the input image 13 and outputs the damage detection result 27A indicating the detected cracks, and the second trained model 21B detects the P cone mark based on the input image 13 and outputs the structure feature region detection result 27B indicating the detected P cone mark.

Next, the processor performs the selection processing of selecting the settlement crack related to the structure feature region detection result 27B (P cone mark) in the damage detection result 27A (cracks) based on the damage detection result 27A and the structure feature region detection result 27B. In this selection processing, as described using Fig. 3, contact between the region of the crack and the region of the P cone mark or overlapping between the region of the crack and the region of the P cone mark is detected, and the crack that is in contact with or overlaps with the region of the P cone mark is selected as the settlement crack.

Next, the processor performs size specification processing of specifying a size of the specific damage (settlement crack) for each corresponding P cone mark.

Hereinafter, the size specification processing of specifying the size of the settlement crack will be described.

<First Size Specification Processing>

In first size specification processing, a relative length between a length of the settlement crack on the image and a length (in this example, a diameter of the P cone mark) of the P cone mark corresponding to the settlement crack on the image is calculated, and the calculated relative length is used as the size of the settlement crack.

According to the first size specification processing, the size of the settlement crack is specified as X times the diameter of the P cone mark. For example, X times may be represented as four grades such as zero (there is no settlement crack), less than three times, greater than or equal to three times and less than five times, and greater than or equal to five times.

<Second Size Specification Processing>

In second size specification processing, the actual size of the settlement crack is calculated based on the length of the settlement crack on the image, the diameter of the P cone mark corresponding to the settlement crack on the image, and the actual size of the P cone mark.

That is, the actual size of the settlement crack can be calculated based on (relative length (X times)) × (actual size of P cone mark) described above.

A numerical value input by the user using the operation unit 18 or a predetermined numerical value can be applied as the actual size of the P cone mark.

<Third Size Specification Processing>

Third size specification processing is applied to a case of the captured image of the structure having a scale reference of a known actual dimension. The scale reference may be a scale marked with gradations attached to the outer surface of the structure or may be a steel material, a head of a bolt, or the like of a known actual dimension provided on the outer surface of the structure.

In the third size specification processing, the actual size of the settlement crack is calculated based on the length of the settlement crack on the image and a length of the scale reference of a known actual dimension on the image.

<Fourth Size Specification Processing>

In fourth size specification processing, the actual size of the settlement crack is calculated based on the length of the settlement crack on the image and an imaging condition and camera information of the camera capturing the image.

Examples of the imaging condition of the camera include a distance (imaging distance) between the camera and the settlement crack or an angle between an imaging direction of the camera and the outer surface of the structure. Examples of the camera information include a focal length of an imaging lens, a size of an image sensor, the number of pixels, or a pixel pitch.

In a case where the imaging direction of the camera is orthogonal to the outer surface of the structure, and the imaging distance is denoted by D, the focal length of the imaging lens is denoted by f, a length obtained by converting the length of the settlement crack on the image into a length on the image sensor is denoted by u, and the pixel pitch is denoted by p, an actual size L of the settlement crack can be calculated based on the following equation.

[Equation 1]

$$L = D \times u \times p/f$$

In the first size specification processing to the fourth size specification processing, in a case where a plurality of settlement cracks are selected with respect to the region of one P cone mark, the length of the longest settlement crack among the plurality of settlement cracks is used as the length (representative length) of the settlement crack corresponding to the P cone mark.

In addition, information about the settlement crack can include not only the length of the settlement crack but also a width and an area of the settlement crack.

The diagram of (B) of Fig. 6 illustrates the first display example of the information or the like about the specific damage displayed on a screen of the display unit.

As shown in (B) of Fig. 6, on the screen of the display unit, an image in which the region of the P cone mark corresponding to the settlement crack is color-coded in accordance with an attribute (size or the like) of the corresponding settlement crack and is superimposed on the panorama composite image ((B) of Fig. 6) is displayed, and information or the like related to various P cone marks is displayed.

In the example shown in (B) of Fig. 6, the regions of 24 P cone marks are color-coded using four colors (red, yellow, green, and blue) based on a result of the first size specification processing.

In (B) of Fig. 6, $P_R$, $P_Y$, $P_G$, and $P_B$ indicating P cone marks have the following settlement cracks.

$P_R$ (red): a P cone mark in which a settlement crack having a length greater than or equal to five times the diameter of the P cone mark occurs.

$P_Y$ (yellow): a P cone mark in which a settlement crack having a length greater than or equal to three times and less than five times the diameter of the P cone mark occurs.

$P_G$ (green): a P cone mark in which a settlement crack having a length less than three times the diameter of the P cone mark occurs.

$P_B$ (blue): a p cone mark in which a settlement crack does not occur.

As shown in (B) of Fig. 6, the total number of P cone marks is 24, and the numbers of P cone marks $P_R$, $P_Y$, $P_G$, and $P_B$ color-coded as described above are two, six, seven, and nine, respectively. The processor calculates a ratio (occurrence ratio) of the total number of P cone marks and the numbers of P cone marks $P_R$, $P_Y$, and $P_G$ corresponding to the settlement crack and also displays the occurrence ratio (in this example, 63%).

According to the display screen in (B) of Fig. 6, presence or absence of the settlement crack in each P cone mark can be easily recognized by the color of the P cone mark, and the size of the settlement crack can be easily recognized from the color of the P cone mark in which the settlement crack occurs. In addition, information such as the occurrence ratio of the settlement crack is also notified.

While the P cone mark is displayed by performing color-coding in (B) of Fig. 6, the present invention is not limited thereto. The crack image may be displayed by coloring all detected cracks, the crack image may be displayed by coloring only the selected settlement crack, or these crack images may be displayed by appropriately switching therebetween.

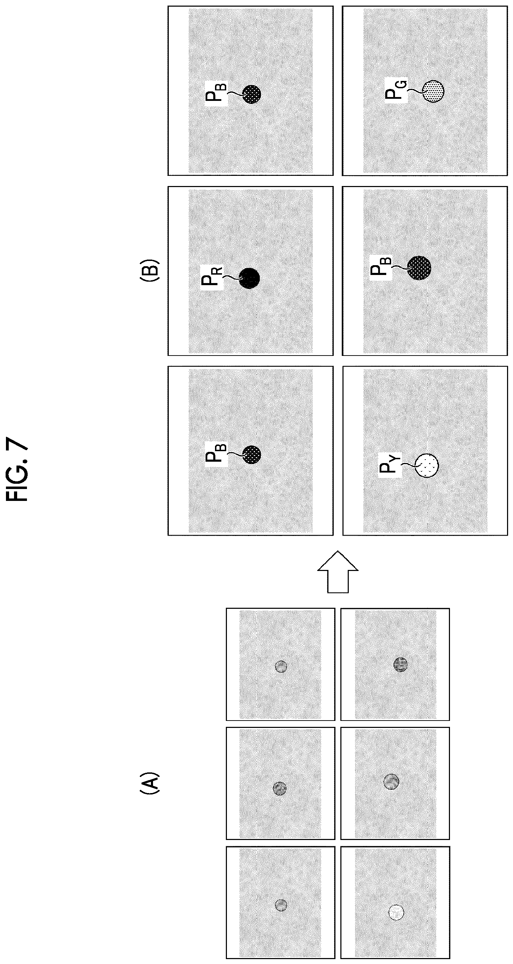

Fig. 7 is a diagram showing a second display example of the captured image of the structure of the evaluation target and the information or the like about the specific damage.

Six captured images of the structure of the evaluation target are shown in (A) of Fig. 7. Each of these six images is an image captured such that one P cone mark is almost at a center of the image.

The diagram of (B) of Fig. 7 illustrates the second display example of the information or the like about the specific damage displayed on the screen of the display unit.

As shown in (B) of Fig. 7, a list of six images is displayed on the screen of the display unit, and the P cone mark of each image is colored in accordance with the attribute (size or the like) of the settlement crack. Color-coding of the P cone mark can be performed as in (B) of Fig. 6.

In addition, the crack detection result may also be displayed. For example, a crack image may be color-coded in accordance with a length of the crack, and the crack image may be color-coded in accordance with a width of the crack. The crack image may be displayed by coloring all detected cracks, the crack image may be displayed by coloring only the selected settlement crack, or these crack images may be displayed by appropriately switching therebetween.

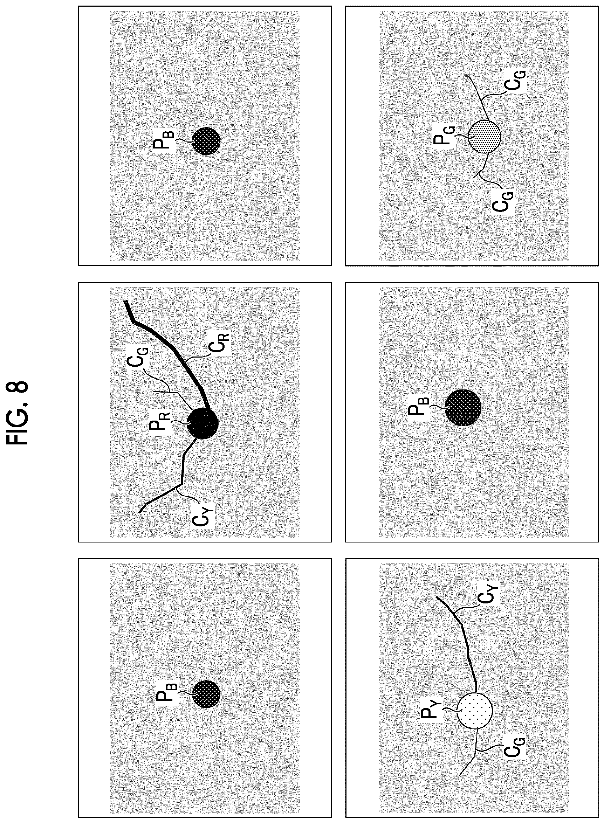

Fig. 8 is a diagram showing a display screen example obtained by adding a color-coded crack image to the image shown in (B) of Fig. 7.

In Fig. 8, three settlement cracks $C_R$, $C_G$, and $C_Y$ occur in the P cone mark $P_R$. Two settlement cracks $C_G$ and $C_Y$ occur in the P cone mark $P_Y$. Two settlement cracks $C_G$ occur in the P cone mark $P_G$.

For example, the settlement cracks $C_R$, $C_G$, and $C_Y$ are color-coded as follows in accordance with the attribute (length) of each settlement crack.

$C_R$ (red): a settlement crack having a length greater than or equal to five times the diameter of the P cone mark.

$C_Y$ (yellow): a settlement crack having a length greater than or equal to three times and less than five times the diameter of the P cone mark.

$C_G$ (green): a settlement crack having a length less than three times the diameter of the P cone mark.

<Another Example of Specific Damage Related to Structure Feature Region Related to Construction of Structure>

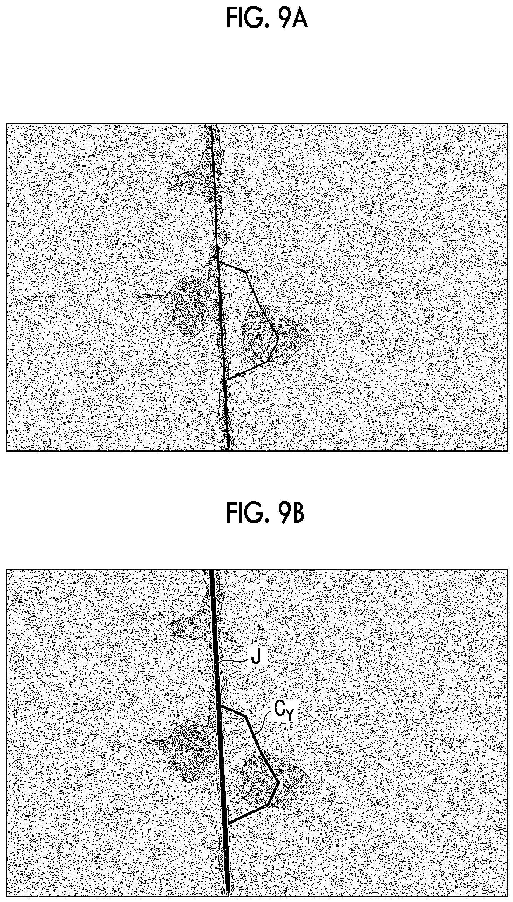

Figs. 9A and 9B are diagrams showing another example of the specific damage related to the structure feature region related to the construction of the structure.

Fig. 9A is the original captured image of the structure of the evaluation target including a joint and a crack.

For concrete in which the crack is likely to occur because of contraction, expansion, and the like based on a temperature, a joint of concrete has a role of preventing the crack in other locations by making cuts at a constant interval on an outer surface of the concrete. However, the crack is induced in the joint. The joint is filled with a joint material (buffer member).

The crack is detected from the original image shown in Fig. 9A as the damage, and a region of the joint is detected as the structure feature region related to the construction of the structure.

A crack of which both ends of the crack are in contact with or overlap with the region of the joint in the detected crack is selected as a specific crack (so-called crescent crack).

The region of the joint may be expanded by performing the expansion processing on the detected region of the joint, or a region slightly larger than the original region of the joint may be detected as the region of the joint.

In addition, in a case of selecting the crescent crack, each of the shortest distances between both ends of the crack and the region of the joint may be calculated, and the crack may be selected as the crescent crack in a case where each calculated distance is within a threshold value.

In Fig. 9B, J denotes the joint, and $C_Y$ denotes the crescent crack of which both ends are in contact with the joint J. Fig. 9B shows a screen in which a joint image and the crack image in which each of a region of the joint J and a region of the crescent crack $C_Y$ is filled with a specific color are displayed in a superimposed manner on the original image in Fig. 9A.

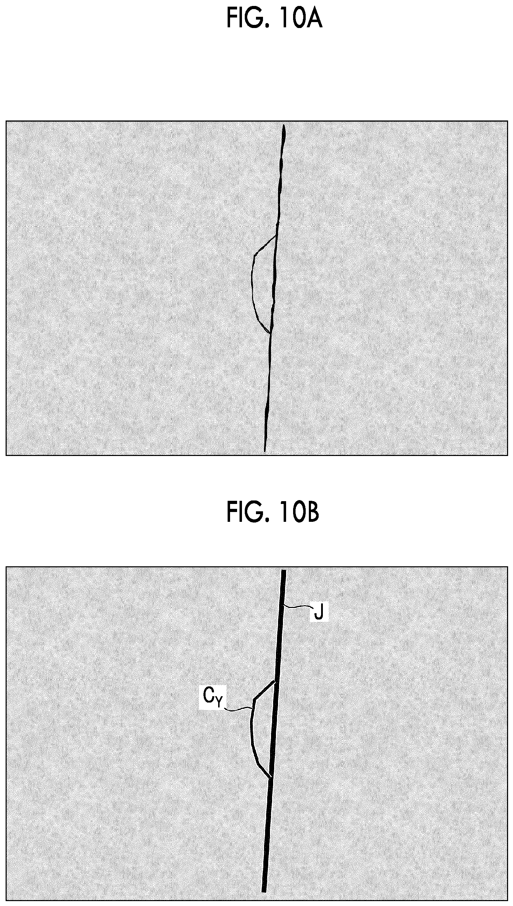

Figs. 10A and 10B are diagrams showing still another example of the specific damage related to the structure feature region related to the construction of the structure.

Fig. 10A is another original captured image of the structure of the evaluation target including a joint and a crack. Fig. 10B shows a screen in which the joint image and the crack image in which each of the region of the joint J and the region of the crescent crack $C_Y$ is filled with a specific color are displayed in a superimposed manner on the original image in Fig. 10 A.

The user can easily recognize the crescent crack $C_Y$ caused by the joint J using the display screens shown in Fig. 9B and Fig. 10B, and application to validity verification of a construction method of the joint and improvement of the construction method of the joint can be made.

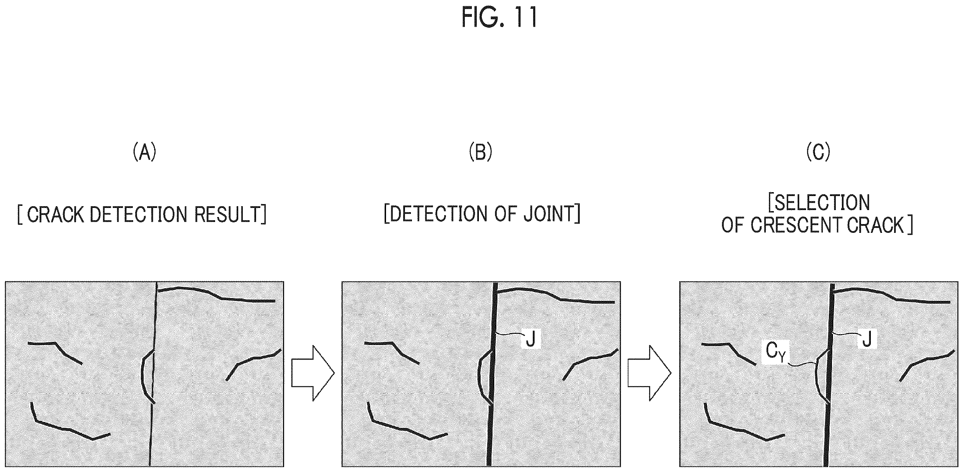

Fig. 11 is a diagram showing another example of the flow from the damage detection to the selection of the specific damage.

As shown in (A) of Fig. 11, the damages (in this example, cracks) of the structure are detected based on the captured image of the structure. The detection of the cracks may be performed using AI or may be performed using the image processing algorithm.

In addition, as shown in (B) of Fig. 11, the structure feature region (in the example in Fig. 11, the region of the joint J) related to the construction of the structure is detected based on the captured image of the structure. The detection of the region of the joint J may be performed using AI or may be performed using the image processing algorithm. In addition, the detection may be performed by receiving an instruction input manually provided by the user.

Next, as shown in (C) of Fig. 11, the crescent crack (specific crack) $C_Y$ related to the region of the joint J among the detected cracks is selected, and the selected crescent crack $C_Y$ is output by performing color-coding or changing a line type so that the selected crescent crack $C_Y$ can be identified from the other cracks.

The crescent crack Cy has both ends in contact with the region of the joint J and is curved in a crescent shape. A crack, such as the crack shown in an upper part of (C) of Fig. 11, of which only one end is in contact with the region of the joint J is not a crescent crack.

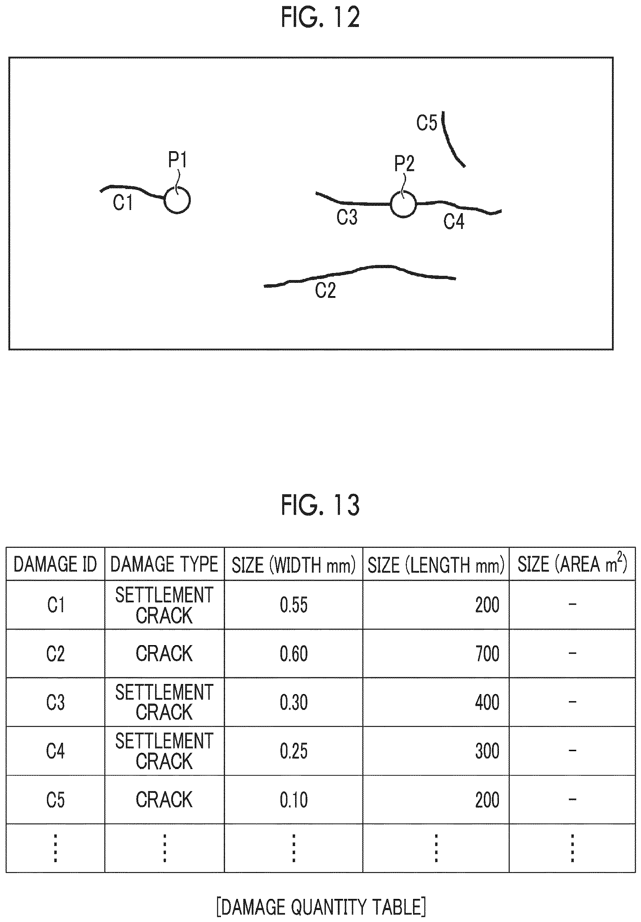

Fig. 12 is a damage diagram including information about the cracks.

In the damage diagram shown in Fig. 12, cracks C1 to C5 and P cone marks P1 and P2 are shown. Particularly, the crack C1 is a settlement crack occurring in the P cone mark P1, and the cracks C4 and C5 are settlement cracks occurring in the P cone mark P2.

In addition, the damage diagram can be represented as a drawing pattern based on a polyline along each of the cracks C1 to C5 and be used as CAD data.

Fig. 13 is a table showing an example of a damage quantity table included in the damage detection result and corresponds to the damage diagram shown in Fig. 12.

The damage quantity table shown in Fig. 13 has items of damage identification (ID) information, a damage type, a size (width), a size (length), and a size (area), and information corresponding to each item is described for each damage.

In a case of the cracks, a length and a width of each of the cracks C1 to C5 are quantified, and this information is described in the damage quantity table in association with the damage ID.

[Editing of Damage Detection Result]

In a case where the captured image 13 of the structure is input, the first trained model 21A shown in Fig. 5 outputs each damage region as the damage detection result 27A. However, the damage detection result 27A may be erroneously detected or inaccurately detected.

For example, the region classification is performed on the damage region in units of pixels or in units of several pixels as one unit. Thus, the damage region may lack accuracy. In addition, it may be more desirable to connect cracks detected as two cracks as one crack. This is because there is a case where connection of the cracks inside the concrete can be inferred.

Therefore, the CPU 20 performs editing instruction reception processing of receiving an editing instruction for the damage detection result through an operation on the operation unit 18 (for example, a mouse) operated by the user and performs editing processing of editing the damage detection result in accordance with the received editing instruction.

In a case of cracks that are linear damages (cracks) and in which endpoints of the polylines along the cracks are close to each other, editing of connecting the endpoints to each other is considered as an editing example of the damage detection result. In the editing in this case, a distance between the endpoints of the polylines of the cracks may be measured after the damage detection processing. In a case where the measured distance is less than or equal to a threshold value, the endpoints may be automatically connected to each other or may be automatically connected to each other in accordance with an instruction of the user. A default value may be used as the threshold value, or the threshold value may be settable by the user.

In addition, threshold values for the length and the width of the crack may be provided, and the damage detection result smaller than the threshold value may be automatically deleted. In the deletion of the damage detection result, the deletion may be automatically performed after the damage detection processing, or the deletion may be performed in accordance with an instruction of the user. A default value may be used as the threshold value, or the threshold value may be settable by the user.

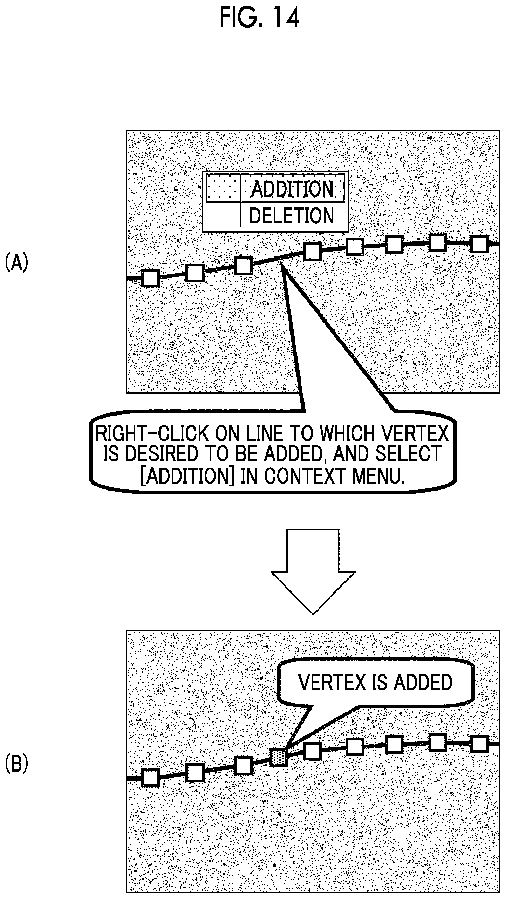

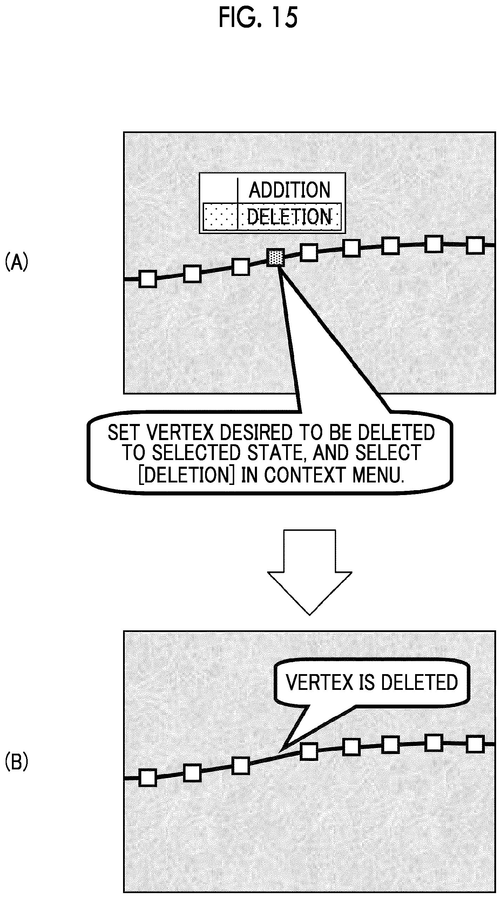

Each of Fig. 14 and Fig. 15 is a diagram showing an editing example of the damage detection result. In a case of editing the damage detection result, it is preferable to set high transparency for the color with which the crack image is filled for a state where the image of the structure is easily visible.

Fig. 14 is a diagram showing a method of adding a vertex to the polyline along the crack.

A polyline is drawn by connecting a plurality of vertices (in Fig. 14, vertices shown by rectangles) along the crack.

In a case of adding a vertex to the polyline, a cursor of the mouse is set on a line of the polyline to which the vertex is desired to be added as shown in (A) of Fig. 14, the mouse is right-clicked, and [addition] is selected in a context menu. Accordingly, a new vertex can be added on the line of the polyline as shown in (B) of Fig. 14.

The polyline along the crack can be edited by dragging the added vertex to move the added vertex to the original region of the crack.

Fig. 15 is a diagram showing a method of deleting a vertex from the polyline along the crack.

In a case of deleting a vertex from the polyline, the cursor of the mouse is set on a vertex desired to be deleted as shown in (A) of Fig. 15, the mouse is right-clicked (sets the vertex in a selected state), and [deletion] is selected in the context menu. Accordingly, the vertex can be deleted from the polyline as shown in (B) of Fig. 15.

In a case where the vertex is deleted from the polyline as shown in (B) of Fig. 15, lines of the polyline are connected between previous and subsequent vertices of the deleted vertex. Accordingly, the polyline along the crack is edited.

As the editing function, a function of setting the entire polyline to a selected state by, for example, clicking the lines connecting the vertices to delete the entire polyline at once, a function of manually adding a new polyline to a location in which the detection of the cracks is not performed, and the like are provided.

[Damage Evaluation Method]

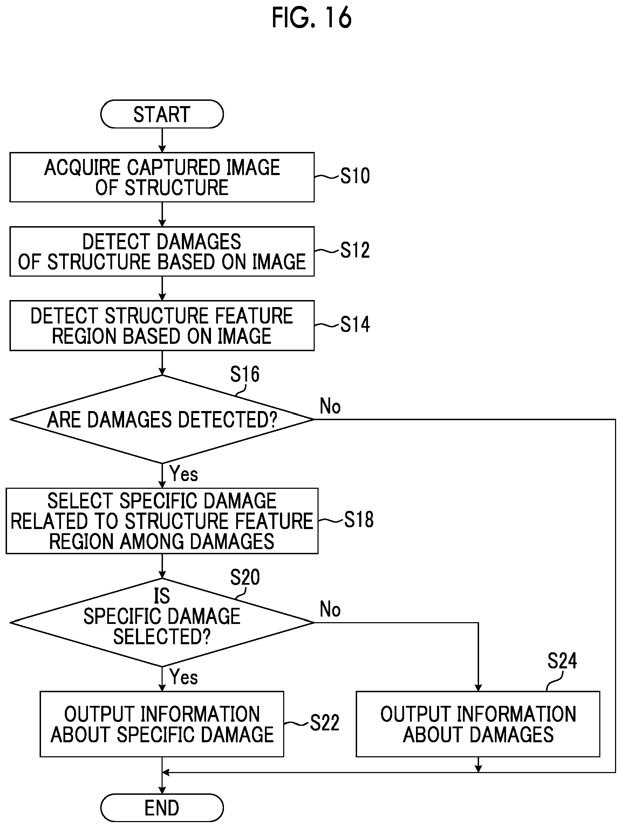

Fig. 16 is a flowchart showing an embodiment of a damage evaluation method according to the present invention.

For example, processing of each step shown in Fig. 16 is performed by the processor composed of the CPU 20 and the like of the damage evaluation device 10 shown in Fig. 4.

In Fig. 16, the processor acquires the captured image of the structure of the evaluation target from the image acquisition unit 12, the image database 14, or the like (step S10).

The first trained model 21A (Fig. 5) functioning as the damage detection processing unit detects the damages (cracks) of the structure based on the image acquired in step S10 (step S12).

The second trained model 21B (Fig. 5) functioning as the feature region detection processing detects the structure feature region (the region of the P cone mark) related to the construction of the structure based on the image acquired in step S10 (step S14).

The processor determines whether or not the damages are detected based on the damage detection processing performed in step S12 (step S16) and transitions to step S18 in a case where the damages are detected (in a case of "Yes").

In step S18, the specific damage (settlement crack) related to the structure feature region among the damages (cracks) detected in step S12 is selected, and a transition is made to step S20.

In step S20, a determination as to whether or not the specific damage is selected is performed. In a case where it is determined that the specific damage is selected (in a case of "Yes"), the processor outputs the information about the specific damage (step S22).

For example, the output of the information about the specific damage is performed by superimposing the damage image on the image, displaying the damage image alone on the display unit, or outputting the CAD data indicating the damage diagram as a file. In addition, it is preferable to specify the size (length) of the specific damage (settlement crack) and output a settlement crack image by performing color-coding or changing a line type in accordance with the specified size.

In addition, in step S20, in a case where it is determined that the specific damage is not selected (in a case of "No"), the information about the cracks is output so that the damages (cracks) detected in step S12 can be identified as not being the settlement crack (step S24). For example, the crack image is output using a different color or line type from the settlement crack. Information about other than the specific damage (settlement crack) may not be output by omitting step S24.

[Other]

In the present embodiment, while the P cone mark and the joint are illustrated as the structure feature region related to the construction of the structure, the present invention is not limited thereto. Other structure feature regions such as a construction joint may be detected. In addition, while the settlement crack and the crescent crack are illustrated as the specific damage related to the structure feature region, water leakage from the joint, the construction joint, or the like or a damage such as free lime that flows out from a concrete member because of water leakage or the like and causes a lime component to come out to the outer surface in a case where moisture evaporates is the specific damage related to the structure feature region (the regions of the joint and the construction joint).

Hardware for implementing the damage evaluation device according to the embodiment of the present invention can be composed of various processors. Examples of the various processors include a central processing unit (CPU) that is a general-purpose processor functioning as various processing units by executing a program, a programmable logic device (PLD) such as a field programmable gate array (FPGA) that is a processor having a circuit configuration changeable after manufacturing, and a dedicated electric circuit such as an application specific integrated circuit (ASIC) that is a processor having a circuit configuration dedicatedly designed to execute specific processing. One processing unit constituting the damage evaluation device may be composed of one of the various processors or two or more processors of the same type or different types. For example, one processing unit may be composed of a plurality of FPGAs or a combination of a CPU and an FPGA. In addition, a plurality of processing units may be composed of one processor. Examples of the plurality of processing units composed of one processor include, first, as represented by a computer such as a client or a server, a form in which one processor is composed of a combination of one or more CPUs and software and this processor functions as the plurality of processing units. Second, as represented by a system on chip (SoC) or the like, a form of using a processor that implements, by one integrated circuit (IC) chip, functions of the entire system including the plurality of processing units is included. Accordingly, various processing units are configured using one or more of the various processors as a hardware structure. Furthermore, the hardware structure of those various processors is more specifically an electric circuit (circuitry) in which circuit elements such as semiconductor elements are combined.

In addition, the present invention includes the damage evaluation program installed on the computer to cause the computer to function as the damage evaluation device according to the embodiment of the present invention and a storage medium on which the damage evaluation program is recorded.

Furthermore, the present invention is not limited to the embodiment, and various modifications can be made without departing from the spirit of the present invention.

Explanation of References

    10: damage evaluation device
    12: image acquisition unit
    13: image
    14: image database
    16: storage unit
    18: operation unit
    20: CPU
    21A: first trained model
    21B: second trained model
    22: RAM
    24: ROM
    26: display control unit
    27A: damage detection result
    27B: structure feature region detection result
    30: display unit
    C1 to C5, $C_R$, $C_G$, $C_Y$: crack
    J: joint
    P, P1, P2, $P_B$, $P_G$, $P_R$, $P_Y$: P cone mark
    S10 to S24: step

**Claims**

1.  A damage evaluation device of a structure, the device comprising:

        a processor,
        wherein the processor is configured to:

            perform image acquisition processing of acquiring a captured image of the structure;
            perform damage detection processing of detecting damages of the structure based on the acquired image;
            perform feature region detection processing of detecting a structure feature region related to construction of the structure based on the acquired image;
perform selection processing of selecting a specific damage related to the detected structure feature region among the detected damages; and
perform information output processing of outputting information about the selected specific damage.

2. The damage evaluation device according to claim 1, wherein the damage detection processing is executed by a first trained model that, in a case where the image is input, outputs a region of each damage for each damage of the structure as a recognition result.

3. The damage evaluation device according to claim 1 or 2,

   wherein the damages of the structure are cracks of the structure, and
   the specific damage is a specific crack that occurs because of the construction of the structure among the cracks of the structure.

4. The damage evaluation device according to any one of claims 1 to 3,
   wherein the feature region detection processing is executed by a second trained model that, in a case where the image is input, outputs the structure feature region as a recognition result.

5. The damage evaluation device according to any one of claims 1 to 4,
   wherein the structure feature region is a region showing a construction mark related to a specific crack that is the specific damage occurring because of the construction of the structure.

6. The damage evaluation device according to any one of claims 1 to 5,
   wherein in the selection processing, a damage in contact with the structure feature region or a damage overlapping with the structure feature region is selected as the specific damage.

7. The damage evaluation device according to claim 6, wherein the selection processing includes expansion processing of expanding a size of the structure feature region, and a damage in contact with the structure feature region after the expansion processing or a damage overlapping with the structure feature region after the expansion processing is selected as the specific damage.

8. The damage evaluation device according to any one of claims 1 to 7,
   wherein the processor is configured to:
   perform size specification processing of specifying a size of the specific damage.

9. The damage evaluation device according to claim 8,

   wherein the damages of the structure include cracks of the structure,
   the specific damage is a specific crack that occurs because of the construction of the structure among the cracks of the structure, and
   in the size specification processing, a relative length between a length of the specific crack on the image and a length of the structure feature region on the image is calculated, and the calculated relative length is used as the size of the specific damage.

10. The damage evaluation device according to claim 8,

    wherein the damages of the structure include cracks of the structure,
    the specific damage is a specific crack that occurs because of the construction of the structure among the cracks of the structure, and
    in the size specification processing, an actual size of the specific damage is calculated based on a length of the specific crack on the image, a length of the structure feature region on the image, and an actual size of the structure feature region.

11. The damage evaluation device according to claim 8,

    wherein the damages of the structure include cracks of the structure,
    the specific damage is a specific crack that occurs because of the construction of the structure among the cracks of the structure,
    the structure having a scale reference of a known actual dimension is captured in the image, and
    in the size specification processing, an actual size of the specific damage is calculated based on a length of the specific crack on the image and a length of the scale reference on the image.

12. The damage evaluation device according to claim 8,

    wherein the damages of the structure include cracks of the structure,
    the specific damage is a specific crack that occurs because of the construction of the structure among the cracks of the structure,
    in the size specification processing, an actual size of the specific damage is calculated based on a length of the specific crack on the image and an imaging condition and camera information of a camera capturing the image.

**13.** The damage evaluation device according to any one of claims 1 to 12,
wherein in the information output processing, each specific damage is identifiably output in accordance with an attribute of the specific damage.

**14.** The damage evaluation device according to any one of claims 1 to 13,
wherein in the information output processing, the structure feature region corresponding to the specific damage is identifiably output in accordance with an attribute of the specific damage.

**15.** The damage evaluation device according to any one of claims 1 to 14,

wherein the processor is configured to:
calculate a ratio of a total number of the structure feature regions and the number of the structure feature regions corresponding to the specific damage, and
in the information output processing, the calculated ratio is output.

**16.** The damage evaluation device according to any one of claims 1 to 15,
wherein the processor is configured to:

perform editing instruction reception processing of receiving an editing instruction for at least one of a detection result of the detected damages or a detection result of the detected structure feature region from an operation unit operated by a user; and
perform editing processing of editing the detection result in accordance with the received editing instruction.

**17.** The damage evaluation device according to any one of claims 1 to 16,
wherein in the information output processing, the information about the specific damage is output and displayed on a display or is stored in a memory as a file.

**18.** The damage evaluation device according to any one of claims 1 to 17,
wherein the information about the specific damage includes a damage quantity table that has items of damage identification information, a damage type, and a size and in which information corresponding to each item is described for each specific damage.

**19.** A damage evaluation method comprising:

performing damage evaluation of a structure by a processor,
wherein each process of the processor includes

a step of acquiring a captured image of the structure,
a step of detecting damages of the structure based on the acquired image,
a step of detecting a structure feature region related to construction of the structure based on the acquired image,
a step of selecting a specific damage related to the detected structure feature region among the detected damages, and
a step of outputting information about the selected specific damage.

**20.** A damage evaluation program causing a computer to execute a method of performing damage evaluation of a structure, the method comprising:

a step of acquiring a captured image of the structure;
a step of detecting damages of the structure based on the acquired image;
a step of detecting a structure feature region related to construction of the structure based on the acquired image;
a step of selecting a specific damage related to the detected structure feature region among the detected damages; and
a step of outputting information about the selected specific damage.

**21.** A non-transitory computer readable recording medium on which the program according to claim 20 is recorded.

## FIG. 1A

## FIG. 1B

# FIG. 2

(A)

[CRACK
DETECTION RESULT]

(B)

[DETECTION OF REGION
OF P CONE MARK]

(C)

[SELECTION
OF SETTLEMENT CRACK]

EP 4 148 663 A1

# FIG. 3

(A)

(B)

THERE IS NO CRACK IN CONTACT WITH OR OVERLAPPING WITH REGION OF P CONE MARK
→ THERE IS NO SETTLEMENT CRACK

P
C1
C2
C3

EXPAND REGION OF P CONE MARK
(MAY BE EXPANDED TO PREDETERMINED SIZE OR MAY BE SET BY USER)

(C)

P1
C1
C2
C3

(D)

P1
C1
C2
C3

EP 4 148 663 A1

FIG. 4

10

12
IMAGE
ACQUISITION
UNIT

14
IMAGE DATABASE

16
STORAGE
UNIT

18
OPERATION
UNIT

20
CPU

22
RAM

24
ROM

26
DISPLAY
CONTROL
UNIT

30
DISPLAY
UNIT

DAMAGE EVALUATION DEVICE

18

# FIG. 5

IMAGE `13` → FIRST TRAINED MODEL `21A` → DAMAGE DETECTION RESULT `27A`

IMAGE `13` → SECOND TRAINED MODE `21B` → STRUCTURE FEATURE REGION DETECTION RESULT `27B`

# FIG. 6

(A)

PANORAMA
COMPOSITE IMAGE

(B)

| | |
|---|---|
| P CONE MARK | :24 |
| $P_R$ | :2 |
| $P_Y$ | :6 |
| $P_G$ | :7 |
| $P_B$ | :9 |

OCCURRENCE
RATIO: 63%

EP 4 148 663 A1

FIG. 7

(A)

(B)

EP 4 148 663 A1

FIG. 8

EP 4 148 663 A1

## FIG. 9A

## FIG. 9B

## FIG. 10A

## FIG. 10B

# FIG. 11

EP 4 148 663 A1

(A)            (B)            (C)

[ CRACK DETECTION RESULT]     [DETECTION OF JOINT]     [SELECTION OF CRESCENT CRACK]

# FIG. 12

# FIG. 13

| DAMAGE ID | DAMAGE TYPE | SIZE (WIDTH mm) | SIZE (LENGTH mm) | SIZE (AREA $m^2$) |
|---|---|---|---|---|
| C1 | SETTLEMENT CRACK | 0.55 | 200 | – |
| C2 | CRACK | 0.60 | 700 | – |
| C3 | SETTLEMENT CRACK | 0.30 | 400 | – |
| C4 | SETTLEMENT CRACK | 0.25 | 300 | – |
| C5 | CRACK | 0.10 | 200 | – |
| ⋮ | ⋮ | ⋮ | ⋮ | ⋮ |

[DAMAGE QUANTITY TABLE]

# FIG. 14

(A)

ADDITION
DELETION

RIGHT-CLICK ON LINE TO WHICH VERTEX
IS DESIRED TO BE ADDED, AND SELECT
[ADDITION] IN CONTEXT MENU.

(B)

VERTEX IS ADDED

# FIG. 15

(A)

ADDITION
DELETION

SET VERTEX DESIRED TO BE DELETED
TO SELECTED STATE, AND SELECT
[DELETION] IN CONTEXT MENU.

(B)

VERTEX IS DELETED

# FIG. 16

```
                    ( START )
                        │
                        ▼
         ┌──────────────────────────────┐
         │   ACQUIRE CAPTURED IMAGE      │──S10
         │        OF STRUCTURE           │
         └──────────────────────────────┘
                        │
                        ▼
         ┌──────────────────────────────┐
         │       DETECT DAMAGES          │──S12
         │  OF STRUCTURE BASED ON IMAGE  │
         └──────────────────────────────┘
                        │
                        ▼
         ┌──────────────────────────────┐
         │  DETECT STRUCTURE FEATURE     │──S14
         │    REGION BASED ON IMAGE      │
         └──────────────────────────────┘
                        │
                        ▼         S16
                   ╱──────────╲           No
                  ╱  ARE DAMAGES ╲──────────────────────┐
                  ╲  DETECTED?   ╱                       │
                   ╲──────────╱                          │
                        │ Yes                            │
                        ▼                                │
         ┌──────────────────────────────┐               │
         │   SELECT SPECIFIC DAMAGE      │──S18          │
         │ RELATED TO STRUCTURE FEATURE  │               │
         │   REGION AMONG DAMAGES        │               │
         └──────────────────────────────┘               │
                        │          S20                   │
                        ▼                                │
                   ╱──────────╲                          │
                  ╱    IS       ╲        No              │
                  ╲ SPECIFIC DAMAGE ─────────┐           │
                  ╱  SELECTED?   ╲           │           │
                   ╲──────────╱              │           │
                        │ Yes               │          S24
                        ▼                    ▼           │
         ┌──────────────────────┐  ┌──────────────────────┐
         │  OUTPUT INFORMATION   │  │  OUTPUT INFORMATION   │
         │ ABOUT SPECIFIC DAMAGE │──S22 │   ABOUT DAMAGES    │
         └──────────────────────┘  └──────────────────────┘
                        │                    │
                        ▼◄───────────────────┘
                    ( END )
```

## INTERNATIONAL SEARCH REPORT

International application No.

**PCT/JP2021/016627**

### A. CLASSIFICATION OF SUBJECT MATTER

*G06T 7/00*(2017.01)i; *G01N 21/88*(2006.01)i
FI: G01N21/88 J; G06T7/00 610Z; G06T7/00 350B

According to International Patent Classification (IPC) or to both national classification and IPC

### B. FIELDS SEARCHED

Minimum documentation searched (classification system followed by classification symbols)

G01N21/84-21/958; G06T1/00-1/40; G06T3/00-9/40; G01B11/00-11/30; E01D1/00-24/00; E21D11/00-19/06; E21D23/00-23/26; E04G23/00-23/08; H04N5/222-5/257

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2016-142601 A (MAEDA CONSTRUCTION) 08 August 2016 (2016-08-08) paragraphs [0021], [0022] | 1-21 |
| A | WO 2016/013133 A1 (WEST NIPPON EXPRESSWAY ENGINEERING SHIKOKU COMPANY LIMITED) 28 January 2016 (2016-01-28) paragraphs [0043]-[0045], fig. 7 | 1-21 |
| A | JP 2012-225889 A (TAIHEIYO CONSULTANT KABUSHIKI KAISHA) 15 November 2012 (2012-11-15) paragraph [0025] | 1-21 |
| A | JP 2015-106238 A (RAILWAY TECHNICAL RESEARCH INSTITUTE) 08 June 2015 (2015-06-08) paragraph [0046] | 1-21 |
| A | JP 2016-121953 A (WEST NIPPON EXPRESSWAY ENGINEERING SHIKOKU COMPANY LIMITED) 07 July 2016 (2016-07-07) paragraphs [0024]-[0029] | 1-21 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **17 June 2021** | **06 July 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

EP 4 148 663 A1

**INTERNATIONAL SEARCH REPORT**

International application No.

**PCT/JP2021/016627**

**C. DOCUMENTS CONSIDERED TO BE RELEVANT**

| Category* | Citation of document, with indication, where appropriate, of the relevant passages | Relevant to claim No. |
|---|---|---|
| A | JP 2005-43324 A (MATSUSHITA ELECTRIC INDUSTRIAL COMPANY LIMITED) 17 February 2005 (2005-02-17)<br>paragraph [0099] | 1-21 |
| A | KR 10-2019-0066789 A (UNIVERSITY OF SEOUL INDUSTRY COOPERATION FOUNDATION) 14 June 2019 (2019-06-14)<br>entire text, all drawings | 1-21 |
| A | WO 2019/009214 A1 (CANON KABUSHIKI KAISHA) 10 January 2019 (2019-01-10)<br>paragraph [0083] | 2-5 |
| A | JP 2019-194562 A (CANON KABUSHIKI KAISHA) 07 November 2019 (2019-11-07)<br>entire text, all drawings | 9-12 |
| A | WO 2017/126367 A1 (FUJIFILM CORPORATION) 27 July 2017 (2017-07-27)<br>entire text, all drawings | 16-18 |

Form PCT/ISA/210 (second sheet) (January 2015)

31

## INTERNATIONAL SEARCH REPORT
### Information on patent family members

International application No.

**PCT/JP2021/016627**

| Patent document cited in search report | | | Publication date (day/month/year) | Patent family member(s) | | | Publication date (day/month/year) |
|---|---|---|---|---|---|---|---|
| JP | 2016-142601 | A | 08 August 2016 | (Family: none) | | | |
| WO | 2016/013133 | A1 | 28 January 2016 | US 2016/0223471 A1 paragraphs [0059]-[0061], fig. 7 KR 10-2017-0039060 A | | | |
| JP | 2012-225889 | A | 15 November 2012 | (Family: none) | | | |
| JP | 2015-106238 | A | 08 June 2015 | (Family: none) | | | |
| JP | 2016-121953 | A | 07 July 2016 | (Family: none) | | | |
| JP | 2005-43324 | A | 17 February 2005 | (Family: none) | | | |
| KR | 10-2019-0066789 | A | 14 June 2019 | (Family: none) | | | |
| WO | 2019/009214 | A1 | 10 January 2019 | US 2020/0134350 A1 paragraph [0124] CN 110892255 A | | | |
| JP | 2019-194562 | A | 07 November 2019 | US 2019/0332881 A1 entire text, all drawings | | | |
| WO | 2017/126367 | A1 | 27 July 2017 | US 2018/0300874 A1 entire text, all drawings EP 3407054 A1 CN 108474748 A | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020038227 A

- JP 2015105905 A

**Non-patent literature cited in the description**

- *Guide for Quality Assurance of Concrete Structure (draft),* December 2015, 17-20, http://www.thr.mlit.go.jp/road/sesaku/tebiki/kyoukyaku.pdf